(19) Europäisches Patentamt
European Patent Office
Office européen des brevets

(11) Publication number: 0 253 933 B1

(12) # EUROPEAN PATENT SPECIFICATION

(45) Date of publication of the patent specification: 07.11.90

(51) Int. Cl.⁵: **C09B 43/14**, C09B 67/22

(21) Application number: 86305681.8

(22) Date of filing: 24.07.86

(54) **A process for the preparation of a water soluble direct green polyazo dyestuffs mixture in situ and water soluble direct green polyazo dyestuffs mixture obtained thereby.**

(43) Date of publication of application: 27.01.88 Bulletin 88/4

(45) Publication of the grant of the patent: 07.11.90 Bulletin 90/45

(84) Designated Contracting States: BE GB IT NL

(56) References cited:
FR-A- 2 392 086
US-A- 1 594 805
US-A- 2 491 566
US-A- 2 686 175
US-D- 444 294

CHEMICAL ABSTRACTS, vol. 104, no. 10, March 1986, page 76, abstract no. 70276j, Columbus, Ohio, US; J.M. KULAWINEK: "Use of chromatographic and spectrophotometric methods in the analysis of Helion Yellow G.", & BIUL. INF.: BARWNIKI SRODKI POMOCNICZE 1985, 29(3), 66-70 SSR 1974 (PUB. 1976), 17-19981, pp. 481-488 000

(73) Proprietor: ATUL PRODUCTS LIMITED, Asoka Chambers Rasala Marg Mithakhali Cross Roads Ellisbridge, Ahmedabad 380006 Gujarat(IN)

(72) Inventor: Patel, Nagajibhai Taljabhai R & D Lab., The Atul Products Ltd. Atul 396 020, District Valsad Gujarat(IN)
Inventor: Bhatt, Girish Ishwarlal R & D Lab., The Atul Products Ltd. Atul 396 020, District Valsad Gujarat(IN)
Inventor: Kulkarni, Subrao Shrinivas R & D Lab., The Atul Products Ltd. Atul 396 020, District Valsad Gujarat(IN)

(74) Representative: Pendlebury, Anthony et al, PAGE, WHITE & FARRER 54 Doughty Street, London WC1N 2LS(GB)

EP 0 253 933 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention is concerned with a process for the preparation of a water soluble direct green polyazo dyestuffs mixture in situ and water soluble direct green polyazo dyestuffs mixture obtained thereby.

Water soluble direct green dyestuffs commonly used for directly dyeing cellulose materials such as cotton or jute fibres or paper are benzidine based. Water soluble direct green benzidine dyestuffs are prepared by tetra-azotising benzidine followed by coupling first with 1-amino-8-hydroxy-naphthalene-3,6-disulfonic acid (H-acid), secondly with aniline diazo or substituted aniline diazo, in which the substituents are chloro, nitro, carboxy or a sulphonic acid group and finally with phenol, resorcinol or salicylic acid. Benzidine is reported to be carcinogenic and has already been banned in some countries and is being banned in several other countries. Strenuous efforts are, therefore, in progress to find water soluble direct green dyestuffs which are not benzidine based. As a result of extensive research and experiments, we have been able to obtain a mixture of water soluble direct green polyazo dyestuffs which has been found to be excellent for directly dyeing cellulose materials such as cotton or jute fibres or paper or leather.

Accordingly, an object of the present invention is to provide a process for the preparation of a mixture of water soluble direct green polyazo dyestuffs in situ.

According to the present invention there is thus provided a process for the preparation of a mixture of water soluble direct green polyazo dyestuffs having formulae IA, IIA and IIIA

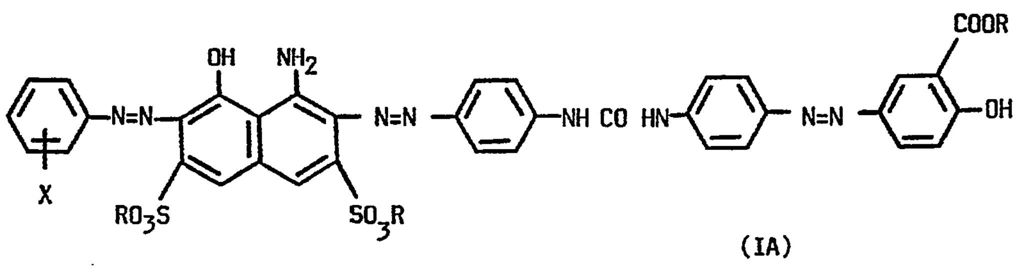

(IA)

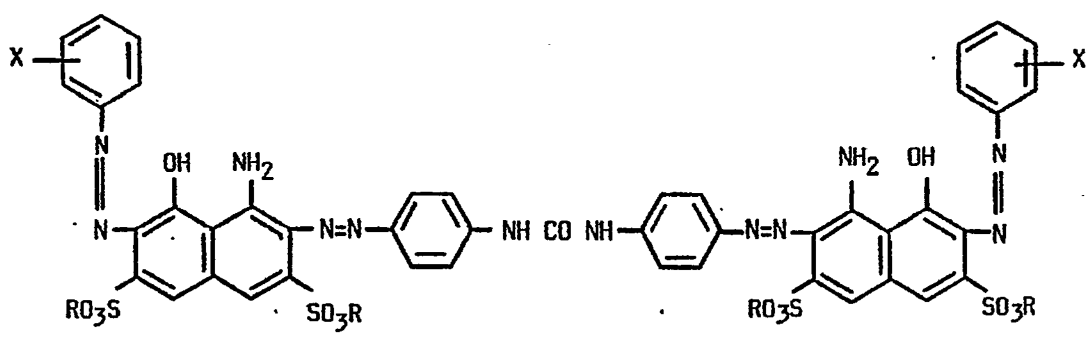

(IIA)

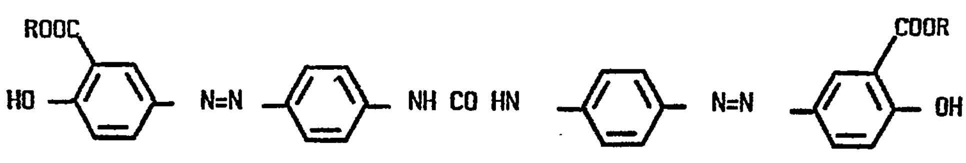

(IIIA)

wherein R is hydrogen, sodium or potassium and X is a lower alkyl group such as a methyl or ethyl group, a lower alkoxy group such as a methoxy or ethoxy group, a chloro or nitro group, a carboxy or sulfonic acid group or hydrogen at the 2, 3 or 4 position, said process comprising phosgenation or condensation of 1 part by weight of a mordant yellow dye of formula IV

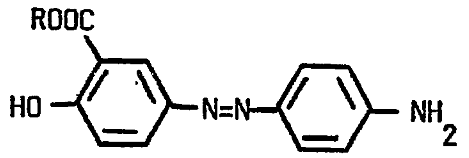

(IV)

wherein R is as defined above, and 3 to 12 parts by weight of acid green dye of formula V

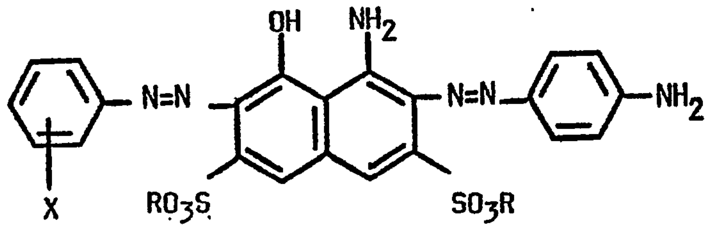

(V)

wherein R and X are as defined above using phosgene gas of the formula $COCl_2$ in an aqueous alkaline medium at a temperature of from 50°C to 80°C to form a mixture of dyestuffs of the said formulae IA, IIA and IIIA in situ, and isolating or recovering the said mixture from the phosgenation or condensation reaction mass.

Preferably, the phosgenation or condensation reaction is carried out at a temperature of from 65°C to 75°C.

Preferably, the alkali used in the aqueous alkaline medium is sodium or potassium hydroxide, carbonate or bicarbonate.

Preferably, 1 part by weight of the mordant yellow dye of the said formula IV and 6 parts by weight of the acid green dye of the said formula V are phosgenated or condensed.

Isolation or recovery of the mixture of dyestuffs of the formulae IA, IIA and IIIA from the phosgenation or condensation reaction mass is preferably carried out by precipitating the said mixture by treating the said reaction mass with an alkali salt such as sodium or potassium chloride or sulphate or an aqueous alkali salt solution such as that of sodium or potassium chloride or sulphate or with a mineral acid such as hydrochloric acid or sulphuric acid at a temperature from 30°C to 90°C and drying the precipitate at a temperature from 85° to 95°C.

According to Example 1 of US-A 1 594 805 58.6 parts of the sodium salt of p-aminobenzene-azo-3.6-disulfo-1-amino-8-naphthol-azo-benzene (A) is reacted with 27.9 parts of the sodium salt of p-aminobenzene-azo-salicylic acid (B). These reactants are treated with phosgene in a temperature range of 50 to 60°C in slightly alkaline solution. The prior art reaction fails outside the scope of the present main claim for the reason that the ratio of the reactants in the present main claim is 1:3 to 12, whereas the corresponding ratio of compound B: compound A in the prior art is approximately 1:2. The prior art reaction is designated to produce a single product rather than a mixture.

The present invention will now be illustrated by the following Examples, in which all the parts are by weight. In the Examples, the abbreviation C.I. means Colour Index.

EXAMPLE 1

10.0 parts of the mordant yellow dye of the formula

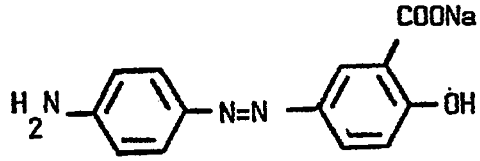

(1)

[Mordant Yellow 12 (C.I. No. 14045). Ref. Colour Index published by The Society of Dyers and Colourists, the United Kingdom and American Association of Textile Chemists and Colourists, The United States of America] and 61.4 parts of the acid green dye of the formula

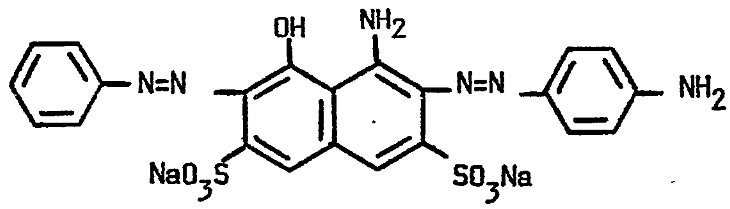

(2)

[Acid Green 20, (C.I. No. 20495). Ref. Colour Index] were stirred with 480 parts of water. The resulting reaction mass was heated to 65-70°C and 15 parts of phosgene gas was passed therethrough over a period of 6 to 8 hours maintaining alkaline test by the addition of 15 to 20 parts of sodium carbonate. At 70-75°C, the reaction mass was then treated with sodium chloride and filtered. The precipitate was dried at 85-90°C in an electric oven to obtain a dyestuffs mixture of the formulae 3A, 4A and 5A.

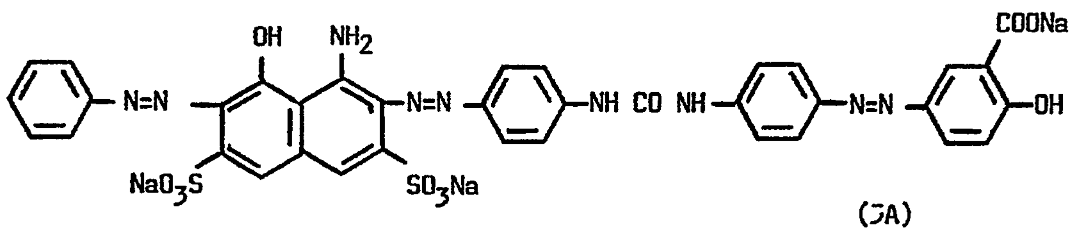

(3A)

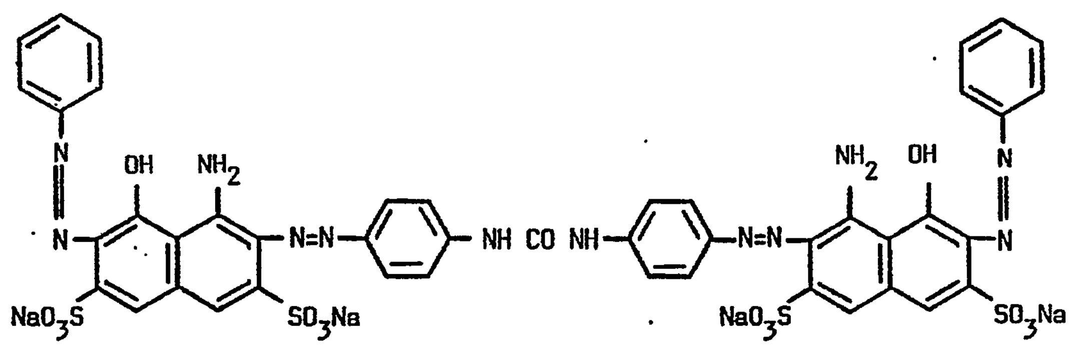

(4A)

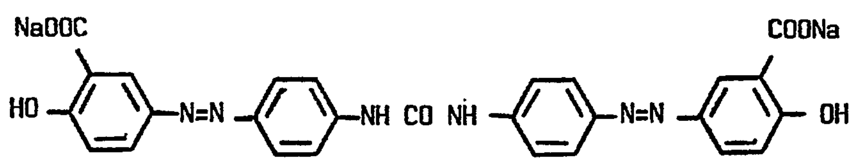

(5A)

On chemical analysis, the percentages of the dyestuffs of the formulae 3A, 4A and 5A in the mixture was found to be
Formula 3A: 60 to 65%
Formula 4A: 20 to 25%
Formula 5A: 5 to 10%

Using the dyestuff mixture of Example 1, cotton fibres, jute fibres, paper and leather were dyed in known manner to obtain a brilliant green shade. The tone and fastness properties of the cotton and jute fibres and paper dyed with the dyestuff mixture of Example 1 were found to be as good as those obtained with water soluble direct green benzidine dyestuffs namely Direct Green 6 (C.I. No. 30295 in the Colour Index) and Direct Green 8 (C.I. no. 30315 in the Colour Index) under identical dyeing conditions.

The dyestuffs mixture of the present invention is thus an ideal substitute for benzidine based water soluble direct green dyestuffs.

## Claims

1. A process for the preparation of a mixture of water soluble direct green polyazo dyestuffs having formulae IA, IIA and IIIA

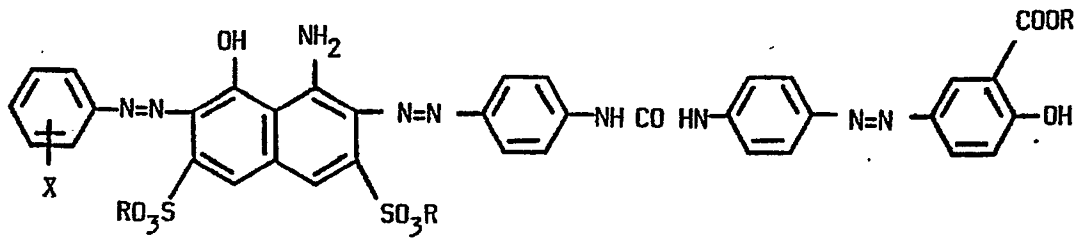

(IA)

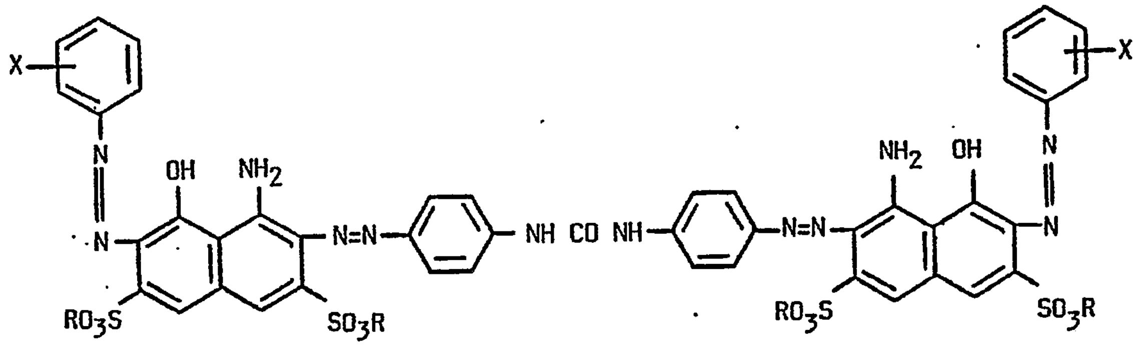

(IIA)

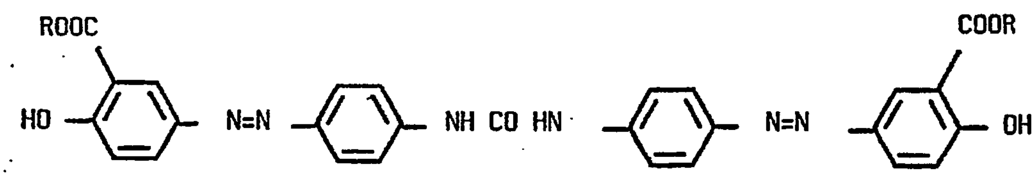

(IIIA)

wherein R is hydrogen, sodium or potassium and X is a lower alkyl group such as a methyl or ethyl group, a lower alkoxy group such as a methoxy or ethoxy group, a chloro or nitro group, a carboxy or sulfonic acid group or hydrogen at the 2, 3 or 4 position, said process comprising phosgenation or condensation of 1 part by weight of a mordant yellow dye of formula IV

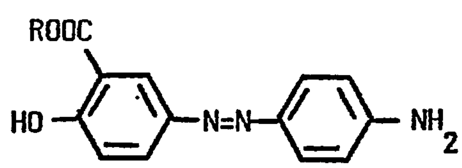

(IV)

wherein R is as defined above, and 3 to 12 parts by weight of acid green dye of formula V

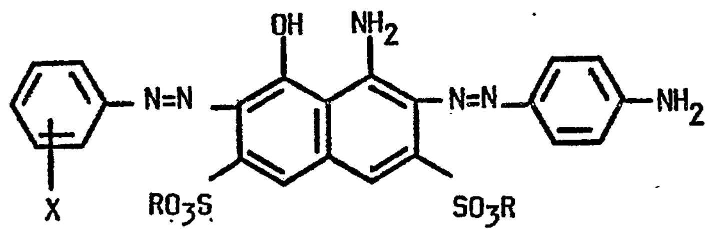

(V)

wherein R and X are as defined above using phosgene gas of the formula $COCl_2$ in an aqueous alkaline medium at a temperature of from 50°C to 80°C to form a mixture of dyestuffs of the said formulae IA, IIA and IIIA in situ, and isolating or recovering the said mixture from the phosgenation or condensation reaction mass.

2. A process as claimed in Claim 1, wherein the phosgenation or condensation reaction is carried out at a temperature of from 65° to 70°C.

3. A process as claimed in Claim 1 or 2, wherein the alkali used in the aqueous alkaline medium is sodium or potassium hydroxide, carbonate or bicarbonate.

4. A process as claimed in any one of Claims 1 to 3, wherein 1 part by weight of the mordant yellow dye of the said formula IV and 6 parts by weight of the acid green dye of the said formula V are phosgenated or condensed.

**Patentansprüche**

1. Verfahren zur Herstellung einer Mischung von wasserlöslichen Direktgrün-Polyazo-Farbstoffen gemäß den Formeln IA, IIA und IIIA,

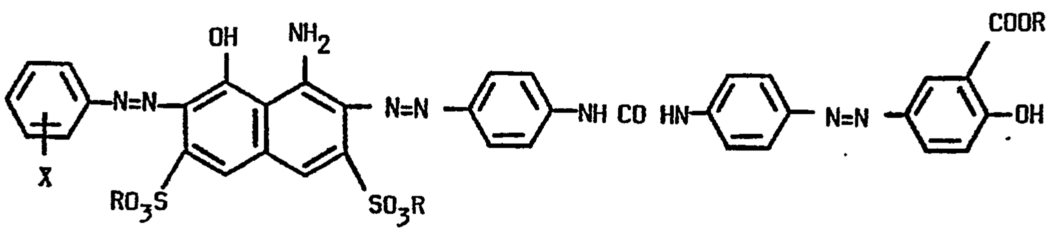

(IA)

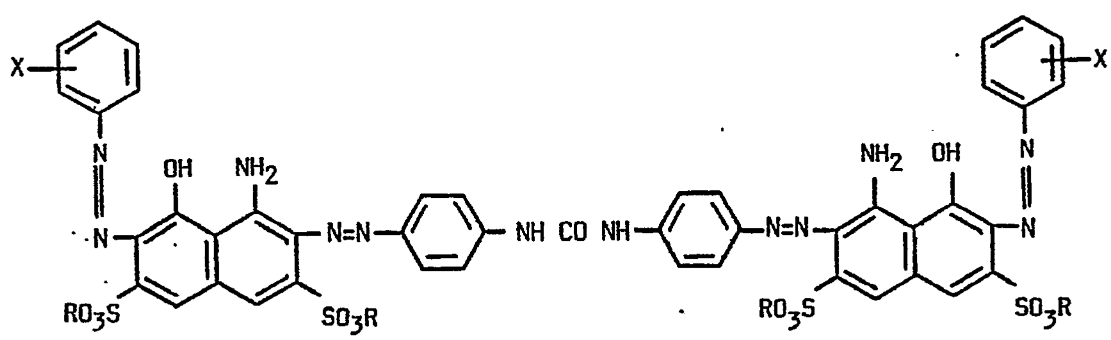

(IIA)

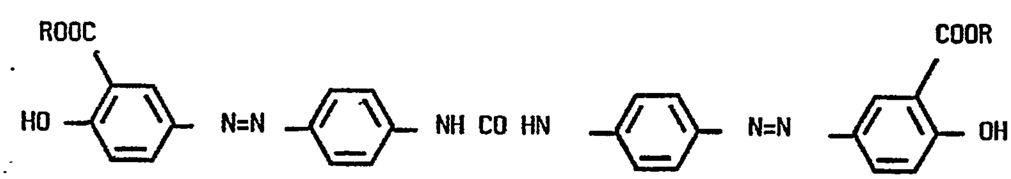

(IIIA)

worin R für Wasserstoff, Natrium oder Kalium und X für eine Niederalkyl-Gruppe, wie z.B. für eine Methyl oder Ethylgruppe, für eine Niederalkoxy-Gruppe, wie z.B. für eine Methoxy- oder Ethoxygruppe, für Chlor oder eine Nitrogruppe, eine Carboxyl- oder Sulfonsäuregruppe oder Wasserstoff in der 2-, 3- oder 4-Stellung steht; wobei das Verfahren folgende Stufen umfaßt:

– die Phosgenierung oder Kondensation eines Gewichtsanteils eines gelben Beizenfarbstoffs gemäß Formel IV,

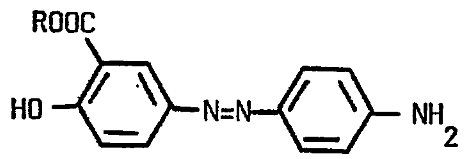

(IV)

worin R wie oben definiert ist, mit 3 bis 12 Gewichtsanteilen eines sauren Grün-Farbstoffs gemäß Formel V,

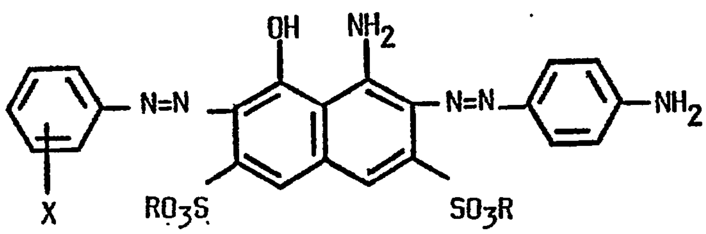

(V)

worin R und X wie oben definiert sind, unter Verwendung von Phosgengas ($COCl_2$) in einem wäßrig-alkalischen Medium bei einer Temperatur zwischen 50°C und 80°C, wobei eine Mischung der Farbstoffe gemäß den Formeln IA, IIA und IIIA in situ gebildet wird; und

– die Abtrennung bzw. Rückgewinnung der Farbstoffmischung aus der Phosgenierungs- bzw. Kondensations-Reaktionsmasse.

2. Verfahren nach Anspruch 1, wobei die Phosgenierungs bzw. Kondensationsreaktion bei einer Temperatur zwischen 65° und 70°C durchgeführt wird.

3. Verfahren nach Anspruch 1 oder 2, wobei die im wäßrigalkalischen Medium eingesetzte Base Natrium- oder Kaliumhydroxid, -carbonat oder -hydrogencarbonat ist.

4. Verfahren nach einem der Ansprüche 1 - 3, wobei 1 Gewichtsanteil des gelben Beizenfarbstoffs gemäß Formel IV mit 6 Gewichtsanteilen des sauren Grün-Farbstoffs gemäß Formel V phosgeniert bzw. kondensiert werden.

## Revendications

1. Procédé de préparation d'un mélange de matières colorantes polyazoïques de vert direct, solubles dans l'eau, répondant aux formules IA, IIA et IIIA:

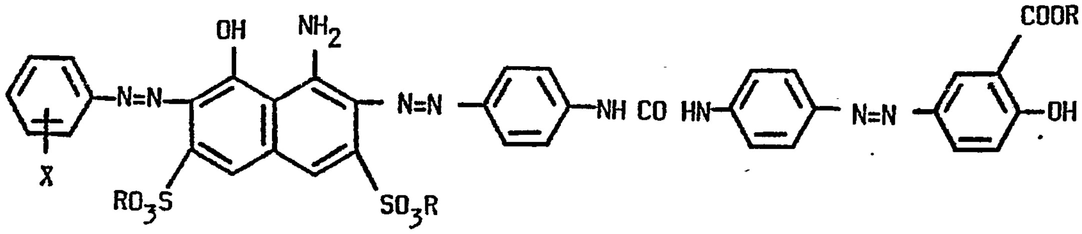

(IA)

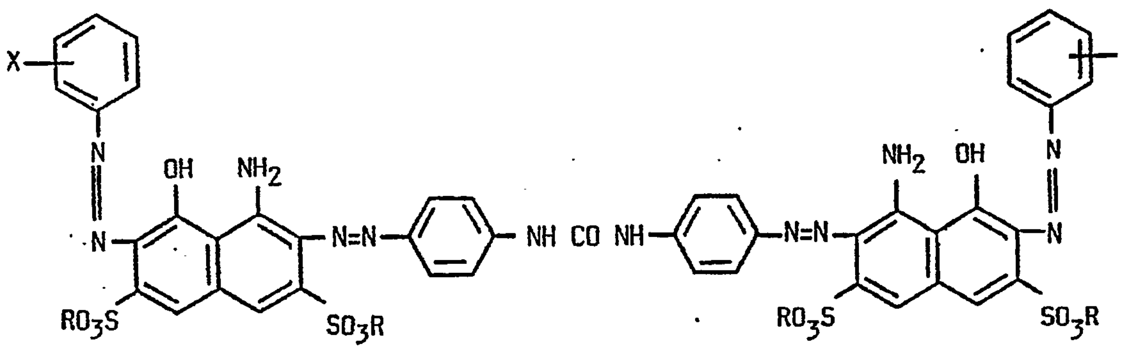

(IIA)

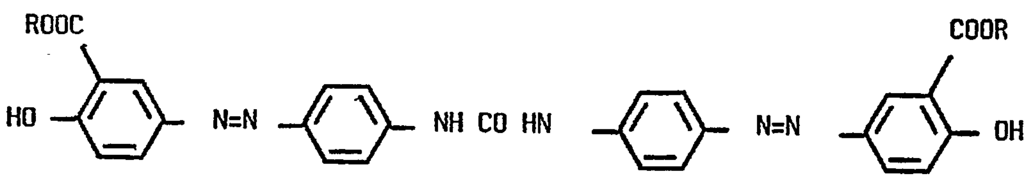

(IIIA)

dans lesquelles R représente l'hydrogène, le sodium ou le potassium, et X représente un groupe alkyle inférieur, tel qu'un groupe méthyle ou éthyle, un groupe alcoxy inférieur, tel qu'un groupe méthoxy ou éthoxy, un groupe chloro ou nitro, un groupe carboxyle ou acide sulfonique, ou l'hydrogène, à la position 2, 3 ou 4, ce procédé comprenant la phosgénation ou la condensation de 1 partie en poids d'un colorant de jaune mordant de formule IV:

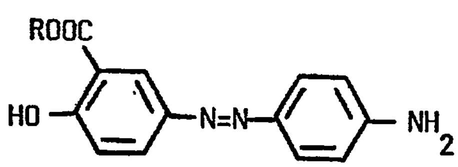

(IV)

dans laquelle R a la définition donnée précédemment, et de 3 à 12 parties en poids d'un colorant de vert acide de formule V

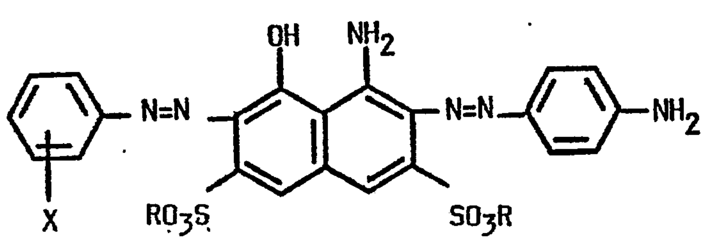

(V)

dans laquelle R et X ont la définition donnée précédemment, en utilisant du phosgène gazeux de la formule $COCl_2$ dans un milieu alcalin aqueux à une température de 50 à 80°C pour former un mélange de matières colorantes des formules IA, IIA et IIIA précitées in situ, et l'isolation ou la récupération du mélange susdit à partir de la masse de réaction de phosgénation ou de condensation.

2. Procédé suivant la revendication 1, caractérisé en ce que la réaction de phosgénation ou de condensation est réalisée à une température de 65 à 70°C.

3. Procédé suivant la revendication 1 ou 2, caractérisé en ce que le composé alcalin utilisé dans le milieu alcalin aqueux est l'hydroxyde, le carbonate ou le bicarbonate de sodium ou de potassium.

4. Procédé suivant l'une quelconque des revendications 1 à 3, caractérisé en ce qu'on soumet à phosgénation ou condensation 1 partie en poids du colorant de jaune mordant de la formule IV précitée et 6 parties en poids du colorant de vert acide de la formule V précitée.